# EUROPEAN PATENT APPLICATION

(11) **EP 3 561 235 A1**
(43) Date of publication of application: **30.10.2019**
(21) Application number: 18169784.8
(22) Date of filing: 27.04.2018
(51) Int. Cl.: F01D 9/06, F01D 25/18

(54) **DEFLECTOR NUT FOR SERVICE PIPE ASSEMBLIES OF TURBINE CENTER FRAMES**

(71) Applicant: MTU Aero Engines AG, 80995 München (DE)
(72) Inventor: Lang, Patrick, 80687 München (DE); Miller, Krzysztof, 37-100 Lancut (PL)

(57) **Abstract**

The present invention relates to a deflector (1) for a gas turbine, wherein the deflector (1) is integrally made of a nut portion (2) having an internal thread (3) and a deflector portion (4) extending radially outwards from the nut portion (2). The deflector may be used for service pipe assemblies in mid turbine frames. The service pipe assembly comprises a first pipe (11) and a second pipe (13) connected to the first pipe via the deflector (1). The service pipe assembly may be used to supply lubricant to a hub section of a turbine engine and therefor extend through a cooled strut (22) wherein cooling air is provided via an inlet (26). To mitigate negative impact of any cooling air leakages through piston seal ring (27) towards nacelle blanket (30) surrouding the mid turbine fram the, deflector (1) comprises said deflector portion (4) for deflecting any leakage flows.

## Description

The present invention relates to a deflector, a deflector assembly and a turbine center frame.

A gas turbine engine usually includes a compressor section, a combustor section and a turbine section. The compressor section compresses air, which is then mixed with fuel and ignited in the combustor section to generate a high pressure exhaust gas to be expanded in the turbine section. The turbine section may comprise amongst others a low pressure (or first) turbine section to drive a low pressure (or first) compressor section, and a high pressure (or second) turbine section to drive a high pressure (or second) compressor section of the compressor section.

It is sometimes observed that high temperature air from a secondary air system (SAS) leaks under high pressure from a piston seal ring provided at a service pipe of a turbine center frame (TCF) and causes damages to the nacelle blanket of the engine. For example, the nacelle blanket suffers from thermal damages caused by leakage of the air from the secondary air system. Because of piston ring liberations, a deflector is sometimes provided around the service pipe to prevent the leaked high temperature air from reaching the nacelle blanket. Such deflector is made of two almost symmetrical metal portions which are arranged opposite to each other around a circumference of the service pipe and fixed to each other by means of a lock wire and/or a metallic panduit strap. However, the attachment of the deflector is often burdensome. Thermal expansion and vibrations might cause detachment of such deflector from a pipe structure during operation, if the design is not robust enough with regard to the operating conditions of the turbine engine. If the deflector is accidentally released from the service pipe, the nacelle blanket is damaged anyway.

It is the object of the invention to provide a deflector, a deflector assembly and a turbine center frame which can overcome the above-mentioned problems.

This object is achieved by a deflector having the features of claim 1, by a deflector assembly having the features of claim 8 and by a turbine center frame having the features of claim 11. The present invention is further developed as set forth in the dependent claims.

According to one aspect of the invention, a deflector for a gas turbine is integrally made by a nut portion having an internal thread and a deflector portion extending radially outwards from the nut portion. Preferably, the deflector is integrally machined out of a bar stock or casted. As an integral part, the deflector is more robust with regard to any engine operation conditions and risks of detachment from the pipe structure can be reduced.

Preferably, the nut portion is a B-nut having an outer surface to be engaged by a conventional screw wrench so that attachment and detachment are simplified.

Preferably, the deflector portion comprises a raised, axially extending circumferential wall, so that the high temperature gas can more reliable be deflected.

Preferably, the nut portion has in its inner circumferential surface an annular recess for receiving a wire or a ring, which may have a sealing function and/or a function to fix the deflector to a pipe structure.

Preferably, the nut portion further comprises a thread-less engagement portion for engaging a circumferential surface of a pipe. For example, the pipe can be pressed into the deflector without being screwed. More preferred, the engagement portion is axially arranged between the recess and the internal thread.

According to another aspect of the invention, a deflector assembly for a turbine center frame comprises a first pipe having a first end; a second pipe having a second end; and a deflector according to the invention, wherein the nut portion of the deflector connects the first and the second ends of the first and the second pipes, respectively.

More preferred, the first pipe comprises a circumferential surface engaged with the engagement portion of the nut portion, and the second pipe comprises an external thread engaged with the internal thread of the nut portion.

Preferably, the deflector assembly further comprises a ring, wherein the first pipe comprises in its outer circumferential surface another recess for receiving the ring.

According to another aspect of the invention, a turbine center frame comprises a deflector assembly according to the invention.

Advantageous further developments are subject of the dependent claims and the description of the figures, where
- Fig. 1: illustrates a schematic construction of a turbine center frame of a gas turbine comprising a deflector assembly according to an embodiment of the present invention;
- Fig. 2A: illustrates a longitudinal section of a deflector assembly according to the embodiment of the present invention;
- Fig. 2B: illustrates a longitudinal section of a deflector according to the embodiment of the present invention;
- Fig. 3A: illustrates a perspective view of the deflector according to the embodiment of the present invention; and
- Fig. 3B: illustrates another perspective view of the deflector according to the embodiment of the present invention.

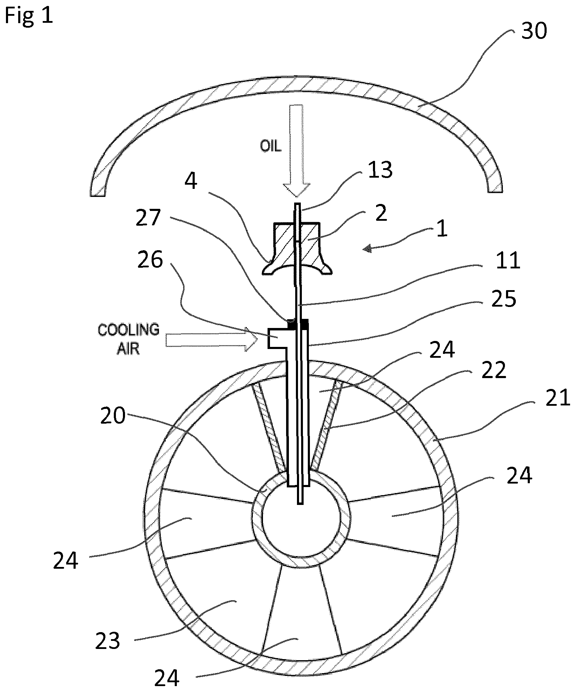

Fig. 1 illustrates a schematic construction of a turbine center frame of a gas turbine engine. In the present embodiment, the turbine center frame is also called as a mid-turbine frame. The turbine center frame can be built-up by several independent parts, or it can be cast in a single piece from a high-temperature material. Such a material can be a metal alloy based on cobalt or nickel. The turbine center frame can for example be implemented in a low pressure or high pressure turbine.

The turbine center frame is surrounded by a nacelle blanket 30 of an aircraft.

The turbine center frame comprises a central hub 20 surrounded by an annular outer case 21. The hub 20 and the case 21 are interconnected by a plurality of struts 22. The struts 22 radially extend between the hub 20 and the case 21. The space 23 between the hub 20 and the case 21 forms a channel 23 for high temperature gas. The assembly made by the hub 20, the strut 22 and the case 21 is also referred as HSC.

Each strut 22 includes a cavity 24 in which a service pipe 11, 13 is arranged. The service pipe includes a first service pipe 11 and a second service pipe 13 which are coaxially connected to each other. The service pipe 11, 13 can provide an oil supply or an oil drain between the hub side and the case side of the turbine center frame. In Fig. 1, the service pipe 11, 13 provides oil supply from the case side to the hub side of the turbine center frame.

Each cavity 24 is in turn supplied with cooling air for cooling the service pipe 11, 13. The cooling air can be extracted for example from a secondary air system (SAS) or an initial stage of a high pressure compressor of the gas turbine engine. The cooling air is supplied by a tube 25 which at least partly surrounds the service pipe 11, 13. The tube 25 comprises an inlet 26, through which the cooling air is introduced into the tube 25. At the other end of the tube 25, there is an outlet to discharge the cooling air, for example into the interior of the hub 20. Adjacent the inlet 26, the service pipe 11, 13 passes through an opening in a wall of the tube 25. The opening is sealed by a wire or piston seal ring 27.

In order to avoid the high temperature cooling air from reaching the nacelle blanket 30, for example if the piston seal ring 27 does not work properly, a deflector 1 is arranged at the service pipe 11, 13. The deflector 1 forms together with the first pipe 11 and the second pipe 13 a deflector assembly. Even when a high pressure difference acts between the cavity 24 and the space outside the piston seal ring 27, the risk of fretting within a piston groove and detachment of the deflector 1 from the service pipe 11, 13 is remarkably reduced.

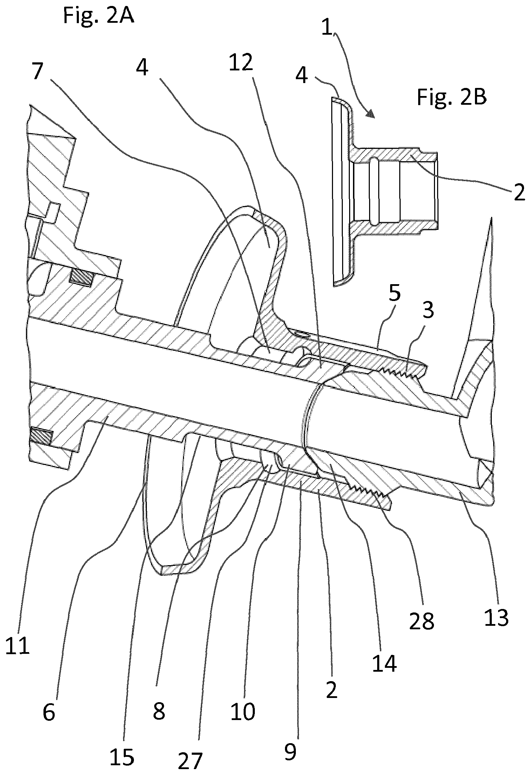

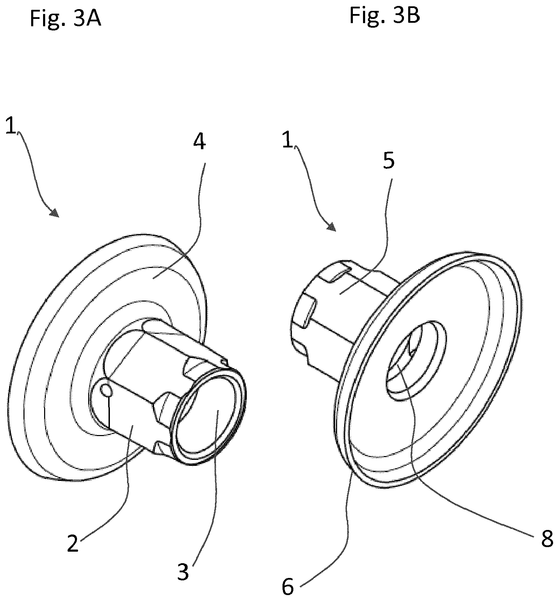

Fig. 2A illustrates a longitudinal section of a deflector assembly according to the embodiment of the present invention; Fig. 2B illustrates a longitudinal section of a deflector according to the embodiment of the present invention; Fig. 3A illustrates a perspective view of the deflector according to the embodiment of the present invention; and Fig. 3B illustrates another perspective view of the deflector according to the embodiment of the present invention. The deflector assembly is formed by the first pipe 11 having the first end 12; the second pipe 13 having the second end 14; and the deflector 1, wherein a nut portion 2 of the deflector 1 connects the first and the second ends 12, 14 of the first and the second pipes 11, 13, respectively.

The deflector 1 is integrally made by the nut portion 2 having an internal thread 3 and a deflector portion 4 extending radially outwards from the nut portion 2. The internal thread 3 engages an external thread 28 of the second pipe 13.

A diameter of the deflector portion 4 can be more than one and a half diameter of the nut portion 2. However, this dimension of the diameter is not limiting, and the diameter of the deflector portion 4 can be made smaller or larger than one and a half diameter of the nut portion 2. The nut portion 2 is a B-nut having an outer surface 5 to be engaged by a conventional screw wrench (not shown). The deflector 1 is integrally machined out of a bar stock of a suitable material, such as an alloy.

The deflector portion 4 comprises a raised, axially extending circumferential wall 6. The deflector portion 4 may have a shape of a bowl or a funnel.

The nut portion 2 has in its inner circumferential surface 7 an annular recess 8 for receiving a ring (not shown). The first pipe 11 comprises in its outer circumferential surface another recess 15 for receiving the ring. The other recess 15 in the embodiment has a larger axial dimension than the annular recess 8. However, the axial dimension of the other recess 15 may be equal or smaller than that of the annular recess 8. The ring may have a sealing function and/or a function to attach the deflector 1 to the service pipes 11, 13.

The nut portion 2 further comprises a thread-less engagement portion 9 for engaging a circumferential surface 10 of the first pipe 11. The engagement portion 9 is axially arranged between the recess 8 and the internal thread 3. For example, the first pipe 11 can be pressed into the deflector 1 without being screwed. If the first end 12 of the first pipe 11 has a flange with a larger diameter, the flange can be sandwiched between the ring and the second pipe 13 as shown in Fig. 2A.

The above-described embodiment of the present invention can be modified in manifold manner. For example, the deflector 1 can be mounted to a single-piece pipe so that the deflector 1 does not connect a first and a second pipe.

The shape of the deflector portion can be modified to a plate shape, a cone shape or any other shape.

In the present embodiment, an outer edge of the raised, axially extending circumferential wall 6 is faced away from the nut portion 2. In a modified embodiment, the outer edge of the raised, axially extending circumferential wall 6 can be faced towards the nut portion 2.

Although exemplary embodiments have been explained in the foregoing description, it should be understood that a variety of modifications are possible. It should also be noted that the exemplary embodiments are merely examples that are not intended to limit the scope, applications and construction in any way. Rather, the skilled person is given by the preceding description a guide for the implementation of at least one exemplary embodiment, wherein various changes, in particular with regard to the function and arrangement of the components described, can be made without departing from the scope, as it turns out according to the claims and equivalent feature combinations.

### Bezugszeichenliste

- 1: deflector
- 2: nut portion
- 3: internal thread
- 4: deflector portion
- 5: outer surface of B-nut
- 6: axially extending circumferential wall
- 7: inner circumferential surface of nut portion
- 8: annular recess
- 9: thread-less engagement portion
- 10: circumferential surface of first pipe
- 11: first pipe
- 12: first end
- 13: second pipe
- 14: second end
- 15: other recess
- 20: hub
- 21: case
- 22: strut
- 23: space between hub and case
- 24: cavity
- 25: tube
- 26: inlet
- 27: piston seal ring, wire
- 28: external thread
- 30: nacelle blanket

## Claims

1. Deflector (1) for a gas turbine, **characterized in that**
the deflector (1) is integrally made by a nut portion (2) having an internal thread (3) and a deflector portion (4) extending radially outwards from the nut portion (2).

2. Deflector (1) according to the preceding claim, **characterized in that**
the nut portion (2) is a B-nut having an outer surface (5) to be engaged by a screw wrench.

3. Deflector (1) according to any one of the preceding claims, **characterized in that**
the deflector (1) including the nut portion (2) and the deflector portion (4) is integrally machined or casted.

4. Deflector (1) according to any one of the preceding claims, **characterized in that**
the deflector portion (4) comprises a raised, axially extending circumferential wall (6).

5. Deflector (1) according to any one of the preceding claims, **characterized in that**
the nut portion (2) has in its inner circumferential surface (7) an annular recess (8) for receiving a wire or a ring.

6. Deflector (1) according to any one of the preceding claims, **characterized in that**
the nut portion (2) further comprises a thread-less engagement portion (9) for engaging a circumferential surface (10) of a pipe (11).

7. Deflector (1) according to the preceding claim, **characterized in that**
the engagement portion (9) is axially arranged between the recess (8) and the internal thread (3).

8. Deflector assembly for a turbine center frame, **characterized by**
a first pipe (11) having a first end (12);
a second pipe (13) having a second end (14); and
a deflector (1) according to any one of the preceding claims, wherein the nut portion (2) of the deflector (1) connects the first and the second ends (12, 14) of the first and the second pipes (11, 13), respectively.

9. Deflector assembly according to the preceding claim, **characterized in that**
the first pipe (11) comprising a circumferential surface (10) engaged with the engagement portion (9) of the nut portion (2), and the second pipe (13) comprising an external thread (28) engaged with the internal thread (3) of the nut portion (2).

10. Deflector assembly according to any one of the preceding claims 8 and 9, further **characterized by**
a ring, wherein the first pipe (11) comprising in its outer circumferential surface another recess (15) for receiving the ring.

11. Turbine center frame, **characterized by**
a deflector assembly according to any one of claims 8 to 10.
